# EUROPEAN PATENT SPECIFICATION

(11) **EP 0 546 858 B1**
(45) Date of publication and mention of the grant of the patent: **21.04.1999**
(21) Application number: 92311347.6
(22) Date of filing: 11.12.1992
(51) Int. Cl.: H04N 5/45

(54) **Television set**
Fernsehgerät
Appareil de télévision

(30) Priority: 11.12.1991 KR 9122626
(43) Date of publication of application: 16.06.1993
(73) Proprietor: Samsung Electronics Co., Ltd., Suwon-city, Kyungki-do 441-370 (KR)
(72) Inventor: Lee, Jun Ho, GA-714, Taiyang Apt., Tongdaemun-ku, Seoul (KR)
(74) Representative: Read, Matthew Charles

(56) References cited:
- EP-A- 0 339 517
- WO-A-92/09170
- DE-B- 2 813 393
- US-A- 4 031 548
- US-A- 4 845 564
- PATENT ABSTRACTS OF JAPAN vol. 13, no. 136 (E-737)5 April 1989 & JP-A-63 299 582 ( FUJITSU GENERAL LTD. ) 7 December 1988
- PATENT ABSTRACTS OF JAPAN vol. 15, no. 195 (E-1069)20 May 1991 & JP-A-3 050 974 ( FUJITSU GENERAL LTD ) 5 March 1991
- PATENT ABSTRACTS OF JAPAN vol. 14, no. 461 (E-987)5 October 1990 & JP-A-2 186 886 ( MATSUSHITA ELECTRIC IND. CO.,LTD. ) 23 July 1990
- IEEE INTERNATIONAL CONFERENCE ON CONSUMER ELECTRONICS, 8 June 1990, ROSEMONT (US) pages 84 - 85 MASASHI HONZAWA ET AL. 'NEW PICTURE IN PICTURE LSI WITH ENHANCED FUNCTIONALITY FOR HIGH PICTURE QUALITY'

## Description

The present invention relates to a a television set comprising only two television tuners, the tuners being a first tuner for receiving terrestrial broadcast television signals, and a second tuner for receiving satellite broadcast television signals.

There is a trend for consumer video products to become more and more complex. In particular, there is a tendency for apparatus performing related functions to be combined within a single product. In the case of television, related apparatus such as a satellite broadcast tuner or a video cassette recorder may be incorporated in a television set.

A combination television set is disclosed in JP-A-63-299582. A combined television set and video recorder having two terrestrial broadcast television tuners is disclosed in US-A-4845564.

Television sets are known which include a broadcast satellite decoder, a picture-in-picture (PIP) facility and a video recorder (VCR). However, separate tuners have been needed for the satellite broadcast decoder, the picture-in-picture facility and for receiving terrestrial broadcast television.

This results in a complexity which is not appropriate for a mass-produced consumer product.

It is an aim of the present invention to overcome this disadvantage of the prior art.

According to the present invention, there is provided a television set as defined in claim 1.

The switching means may be controlled by a single microcomputer.

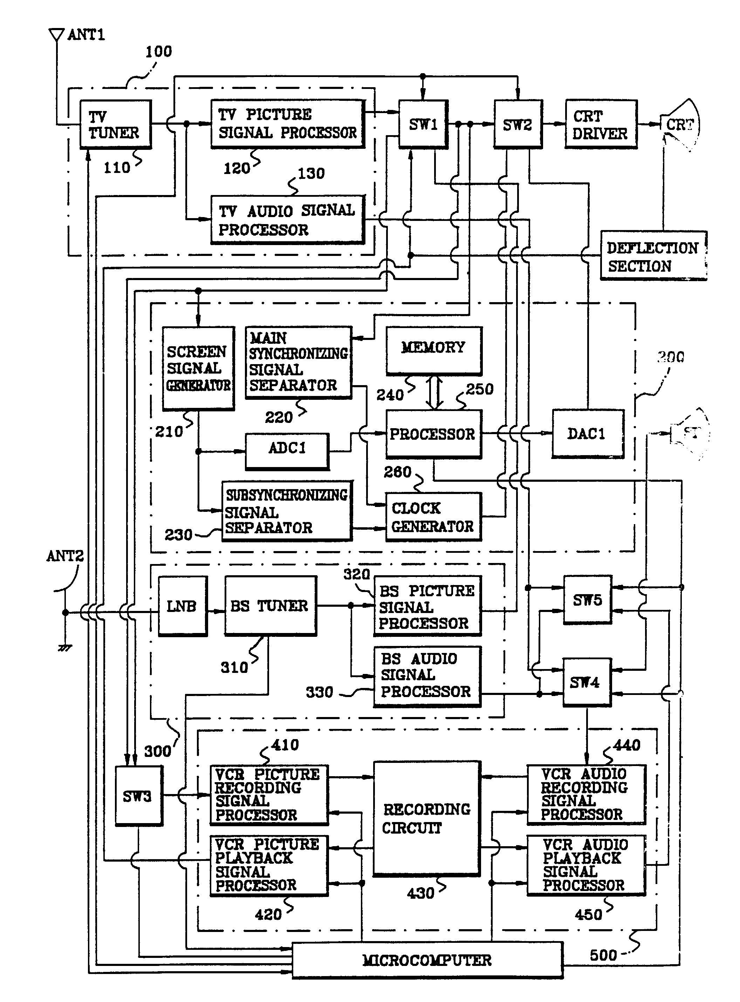

An embodiment of the present invention will now be described, by way of example, with reference to the accompanying drawing which is a block diagram of a television set according to the present invention.

Referring to the Figure, a television set comprises a television signal processing section 100 for processing television signals from a television tuner 110; a PIP signal processing section 200 for producing a PIP signal which is to be displayed as a subscreen; a broadcast satellite television (BS) signal processing section 300 for processing BS signals from a BS tuner; a VCR signal processing section 400 for processing a VCR signal; a microcomputer for controlling each system block; switches SW1 ... SW5 for respectively selecting picture and audio signals for the television main screen and subscreen under the control of the microcomputer.

The television signal processing section 100 further includes a television tuner 110 for receiving a television signal from an antenna ANT1, television picture and audio signal processors 120 and 130 for providing television picture and audio signals.

The PIP signal processing section 200 includes screen signal generator 210 for converting a subscreen signals into luminance (Y) and colour difference (R-Y) and (B-Y) signals; an analogue to digital converter ADC1; a main synchronizing signal separator 220 for obtaining a synchronizing signal for the main screen; a processor 240 for processing a subscreen signal, digitised by the analogue to digital converter ADC1; a memory 250 for storing a signal for the subscreen, digitised by the analogue to digital converter ADC1; a clock generator 260 for causing the subscreen, stored in the memory 250, to have a predetermined location and size within the main screen, based on outputs from the main and subsynchronizing signal separators 220 and 230, and a digital to analogue converter DAC1 for converting a signal output by the processor 240 into an analogue signal. Suitable control signals are applied to the memory 250 from the clock generator 260.

The BS signal processing section 300 comprises a low noise block downconverter LNB for downconverting a BS signal which is received by BS antenna ANT2; a BS tuner 310 for detecting a signal after channel tuning of the BS signal from the LNB; a BS picture signal processor 320 for processing BS signals from the BS tuner 310; a BS audio signal processor 330 for processing BS audio signals from the BS tuner 310.

The VCR signal processing section 400, for processing the VCR signal, includes a VCR picture recording signal processor 410 capable of processing signals desired to be recorded; a VCR picture playback signal processor 420 for processing and outputting played back picture signals; a recording section 430 for recording picture and audio signals; a VCR audio recording signal processor 440 for processing audio signals to be recorded by the VCR; a VCR audio playback signal processor 450 for processing played back audio signals from the VCR.

In addition, the TV main screen selection switch SW1, coupled to the TV signal processing section 100, the BS signal processing section 300, the VCR signal processing section 400 and the microcomputer, is switched by a signal from the microcomputer. This causes a signal to be displayed on the main TV screen by selecting a signal from among the television picture signal, the BS picture signal and the played back VCR picture signal.

The subscreen selection switch SW2, coupled to the TV main screen selection switch SW1, the PIP signal processing section 200 and the microcomputer, makes a selection from among main screen signal from the TV main selection switch SW1 and a subscreen signal which is output from the digital to analogue coverter DAC1 by a clock signal from the clock generator 260. This creates the PIP screen, displayed within the television main screen, by selecting the main screen signal or the subscreen signal in response to the clock signal, generated by the clock generator 260, causing the PIP function to be ON or OFF according to a control signal from the microcomputer, when PIP is enabled by the microcomputer.

The VCR recording signal selection switch SW3, coupled to the main television and subscreen selecting switches SW1, SW2 and the microcomputer, selects a signal to be recorded by the VCR from the television main or subscreen signals under the control of the microcomputer.

The audio output/recording selection switch SW4, coupled to the television signal processing section 100, the BS signal processing section 300 and the microcomputer, is a switch for selecting audio signals to be recorded by the VCR and for providing the audio signals of the television main and subscreens to a loudspeaker SP under the control of the microcomputer.

The audio output switch SW5, coupled to the television signal, the BS signal and the VCR signal processing sections 100, 300, 400 and the microcomputer is a switch for providing audio signal of the television main and subscreens to loudspeaker SP under the control of the microcomputer.

The operation of the above-described television set will now be described. A television signal from the television tuner 110 is tuned and applied to the television main screen selection switch SW1 via the television picture signal processor 120. A BS signal from the BS antenna ANT2 is converted to a lower intermediate frequency after amplification by the low noise block downconverter LNB. This signal is channel tuned by the BS tuner 310 and demodulated as a composite video signal. This becomes the BS picture signal after processing by the BS picture signal processor 320 and is applied to the television main screen selection switch SW1.

When the television main screen signal is selected to be a television picture signal from the television picture signal processor 120 by the microcomputer and the television subscreen signal is selected to be a BS picture signal. The BS picture signal is dematrixed to yield luminance (Y) and colour difference (R-Y) and (B-Y) signals after the screen signal generator 210 according to the switching operation of the television main screen selection switch SW1.

The subscreen selection switch SW2 is switched by the output from the clock generator 260, so that either the television signal or the signal from the digital to analogue converter DAC1 are fed to the CRT driver. The switching of the subscreen selection switch is such that the BS picture appears within the television picture on the CRT.

Since, the subscreen picture is derived from the signal tuned by the tuner, which is not supplying the main picture, the PIP signal processing section 200 does not need a dedicated tuner.

Signals selected to be the main screen signal and the subscreen signal are supplied to the television main screen selection switch SW1 and when it is desired to record the subscreen while watching the main screen, the subscreen signal is recorded by placing the VCR recording signal selection switch SW3 in the appropriate state.

When it is desired to record the main screen while watching the subscreen, the main screen signal is selected by the VCR recording signal selection switch SW3 and recorded through the VCR picture recording signal processor 410.

Either the BS picture signal or the television picture signal may be selected to be the main screen signal; the other picture signal being the subscreen signal. The selection is effected by the main and subscreen selection switches SW1 and SW2 under the control of the microcomputer.

A played back VCR picture signal is coupled to the main screen selection switch SW1 via the VCR picture playback signal processor 420. If the VCR playback picture signal is to be the main picture signal, the VCR picture playback signal is applied to the PIP signal processing section 200 for the extraction of synchronizing signals and to the main picture selection switch SW1. The television picture may form the subscreen picture signal.

In the case of audio signals, TV audio signals, which are processed by the television audio signal processor 130, and the BS audio signals, which are processed by the BS audio signal processor 330, are selected by the audio output/recording selection switch SW4 under the control of the microcomputer, whereby the desired aduio signal is output to the loudspeaker SP and the audio signal to be recorded, corresponding to picture signal being recorded by the VCR, to the audio recording signal processor 410. When it is required to output audio signal, which have been previously recorded by the VCR, audio signals are output by the audio output switch SW5 under the control of the microcomputer.

The microcomputer controls the switching of each switch SW1 ... SW5, whereby picture and audio signals of a main screen and a subscreen are selected, and a PIP signal is created, in response to the state of the television main and subscreen selection switches SW1 and SW2, by the PIP signal processing circuit 200, so that a tuner for the PIP facility is not needed.

As described above, a television set according to the present invention has the advantages of simple circuitry and low cost.

The invention is in no way limited to the embodiment described hereinabove. Various modifications of disclosed embodiment as well as other embodiments of the invention will become apparent to persons skilled in the art upon reference to the description of the invention. It is therefore contemplated that the appended claims will cover any such modifications or embodiments as fall within the scope of the invention.

## Claims

1. A television set comprising:
only two television tuners, the tuners being a first tuner (110) for receiving terrestrial broadcast television signals, and a second tuner (310) for receiving satellite broadcast television signals;
a video recording means (500) for recording and playing back television signals;
picture-in-picture means (200); and
switching means (SW1 ... SW3) arranged whereby:
(a) the outputs of both tuners (110, 310) and the video recording means (500) can be selected for display of the respective television picture on the main screen;
(b) the outputs of the tuners (110, 310) can be selected for recording by the video recording means (500); and
(c) the outputs of both tuners (110, 310) and the video recording means (500) can be selected for application to the picture-in-picture means (200) for displaying the respective television picture on the subscreen within another television picture.

2. A television set according to claim 1, including a single microcomputer for controlling the switching means (SW1 ... SW3).

3. A television set according to claim 2, including a television signal processing means (120,130) for processing signals from the first tuner and a satellite broadcast signal processing means (320,330) for processing signals from the second tuner, wherein the picture-in-picture means includes a clock generator (260) for generating clock pulses and the switching means comprises:
television main screen selection means (SW1), responsive to the microcomputer and connected to the television signal processing means, the satellite broadcast signal processing means and the video recording means, for selecting and displaying as the main screen display a signal from among a television picture signal, a satellite broadcast picture signal and a video recording means playback picture signal generated respectively by the television signal processing means, the satellite broadcast signal processing means and the video recording means, and for selecting a subscreen signal from among a television picture signal, a satellite broadcast picture signal and a video recording means playback picture signal generated respectively by the television signal processing means, the satellite broadcast signal processing means and the video recording means;
a television subscreen selection means (SW2), responsive to the microcomputer and connected to the television main screen selection means and the picture-in-picture means, for displaying the selected subscreen signal as a picture-in-picture in the main screen display, the picture-in-picture signal being output to the television subscreen selection means and read out at a clock rate provided by the clock pulses from the clock generator;
an audio output and recording signal selection means (SW4), responsive to the microcomputer and connected to the television signal processing means, satellite broadcast signal processing means, for selecting an audio signal to be recorded by the video recording means, the audio signal being selected from among the audio signals associated with the television picture signal and the broadcast satellite picture signal; and
an audio output means (SW5), responsive to the microcomputer and connected to the television signal processing means, the satellite broadcast signal processing means and the video recording means, for providing an audio signal selected from the audio signals associated with the television picture signal, the satellite broadcast picture signal and the audio recorded by the video recording means.

## Patentansprüche

1. Fernsehgerät mit
lediglich zwei Fernsehtunern, nämlich einem ersten Tuner (110) zum Empfang von erdgebundenen Rundfunk-Fernsehsignalen und einem zweiten Tuner (310) zum Empfang von Satellitenrundfunk-Fernsehsignalen,
einer Videoaufzeichnungseinrichtung (500) zum Aufzeichnen und Wiederabspielen von Fernsehsignalen,
einer Bild-im-Bild-Einrichtung (200) und
einer Schalteinrichtung (SW1 ... SW3), die dafür eingerichtet ist, daß
(a) die Ausgangssignale beider Tuner (110, 310) und der Videoaufzeichnungseinrichtung (500) zur Anzeige des jeweiligen Fernsehbildes auf dem Hauptbildschirm ausgewählt werden können,
(b) die Ausgangssignale der Tuner (110, 310) zur Aufzeichnung durch die Videoaufzeichnungseinrichtung (500) ausgewählt werden können und
(c) die Ausgangssignale beider Tuner (110, 310) und der Videoaufzeichnungseinrichtung (500) ausgewählt werden können, der Bild-im-Bild-Einrichtung (200) zugeführt zu werden, zur Anzeige des jeweiligen Fernsehbildes auf dem Teilbildschirm innerhalb eines anderen Fernsehbildes.

2. Fernsehgerät nach Anspruch 1, mit einem einzelnen Mikrocomputer zur Steuerung der Schalteinrichtung (SW1, ... SW3).

3. Fernsehgerät nach Anspruch 2, mit einer Fernsehsignal-Verarbeitungseinrichtung (120, 130) zur Verarbeitung von Signalen vom ersten Tuner und einer Satellitenrundfunksignal-Verarbeitungseinrichtung (320, 330) zur Verarbeitung von Signalen vom zweiten Tuner, wobei die Bild-im-Bild-Einrichtung einen Taktgenerator (260) zur Erzeugung von Taktimpulsen enthält und wobei die Schalteinrichtung folgendes aufweist:
eine Fernsehhauptbildschirm-Auswahleinrichtung (SW1), die auf den Mikrocomputer reagiert und mit der Fernsehsignal-Verarbeitungseinrichtung, der Satellitenrundfunksignal-Verarbeitungseinrichtung und der Videoaufzeichnungseinrichtung verbunden ist, zur Auswahl und Anzeige eines Signals aus einem Fernsehbildsignal, einem Satellitenrundfunk-Bildsignal und einem Videoaufzeichnungseinrichtungs-Wiederabspielbildsignal, die jeweils von der Fernsehsignal-Verarbeitungseinrichtung, der Satellitenrundfunksignal-Verarbeitungseinrichtung und der Videoaufzeichnungseinrichtung erzeugt werden, als die Hauptbildschirmanzeige und zur Auswahl eines Teilbildschirmsignals aus einem Fernsehbildsignal, einem Satellitenrundfunk-Bildsignal und einem Videoaufzeichnungseinrichtungs-Wiederabspielbildsignal, die jeweils von der Fernsehsignal-Verarbeitungseinrichtung, der Satellitenrundfunksignal-Verarbeitungseinrichtung und der Videoaufzeichnungseinrichtung erzeugt werden,
eine Fernsehteilbildschirm-Auswahleinrichtung (SW2), die auf den Mikrocomputer reagiert und mit der Fernsehhauptbildschirm-Auswahleinrichtung und der Bild-im-Bild-Einrichtung verbunden ist, zur Anzeige des ausgewählten Teilbildschirmsignals als ein Bild-im-Bild auf der Hauptbildschirmanzeige, wobei das Bild-im-Bild-Signal an die Fernsehteilbildschirm-Auswahleinrichtung ausgegeben und mit einer durch die Taktimpulse vom Taktgenerator erzeugten Taktfrequenz ausgelesen wird,
eine Tonausgabe- und -aufzeichnungssignal-Auswahleinrichtung (SW4), die auf den Mikrocomputer reagiert und mit der Fernsehsignal-Verarbeitungseinrichtung und der Satellitenrundfunksignal-Verarbeitungseinrichtung verbunden ist, zur Auswahl eines von der Videoaufzeichnungseinrichtung aufzuzeichnenden Tonsignals, das aus den Tonsignalen ausgewählt wird, die zu dem Fernsehbildsignal und dem Satellitenrundfunk-Bildsignal gehören, und
eine Tonausgabeeinrichtung (SW5), die auf den Mikrocomputer reagiert und mit der Fernsehsignal-Verarbeitungseinrichtung, der Satellitenrundfunksignal-Verarbeitungseinrichtung und der Videoaufzeichnungseinrichtung verbunden ist, um ein Tonsignal zu liefern, das aus den Tonsignalen ausgewählt wird, die zu dem Fernsehbildsignal, dem Satellitenrundfunk-Bildsignal und dem von der Videoaufzeichnungseinrichtung aufgezeichneten Ton gehören.

## Revendications

1. Poste de télévision comprenant :
seulement deux récepteurs de télévision, les récepteurs comprenant un premier récepteur (110) pour recevoir des signaux de télévision transmis par radiodiffusion terrestre, et un deuxième récepteur (310) pour recevoir des signaux de télévision transmis par radiodiffusion par satellite ;
des moyens d'enregistrement vidéo (500) pour enregistrer et reproduire des signaux de télévision ;
des moyens de formation d'image dans l'image (200) ; et
des moyens de commutation (SW1 ... SW3) configurés de telle sorte que :
(a) les sorties des deux récepteurs (110, 310) et des moyens d'enregistrement vidéo (500) puissent être sélectionnés pour l'affichage de l'image de télévision respective sur l'écran principal ;
(b) les sorties des récepteurs (110, 310) puissent être sélectionnées pour un enregistrement à l'aide des moyens d'enregistrement vidéo (500) ; et
(c) les sorties des deux récepteurs (110, 310) et des moyens d'enregistrement vidéo (500) puissent être sélectionnées pour l'application aux moyens de formation d'image dans l'image (200) pour afficher l'image de télévision respective sur le sous-écran à l'intérieur d'une autre image de télévision.

2. Poste de télévision selon la revendication 1, comprenant un micro-ordinateur unique pour commander les moyens de commutation (SW1 ... SW3).

3. Poste de télévision selon la revendication 2, comprenant des moyens de traitement de signal de télévision (120, 130) pour traiter des signaux venant du premier récepteur et des moyens de traitement de signal de radiodiffusion par satellite (320, 330) pour traiter des signaux venant du deuxième récepteur, dans lequel les moyens de formation d'image dans l'image comprennent un générateur d'horloge (260) pour générer des impulsions d'horloge, et les moyens de commutation comprennent :
des moyens de sélection d'écran principal de télévision (SW1) réagissant au micro-ordinateur et connectés aux moyens de traitement de signal de télévision, aux moyens de traitement de signal de radiodiffusion par satellite et aux moyens d'enregistrement vidéo, pour sélectionner et afficher comme affichage d'écran principal un signal qui est l'un parmi un signal d'image de télévision, un signal d'image de radiodiffusion par satellite et un signal d'image de reproduction de moyens d'enregistrement vidéo, générés respectivement par les moyens de traitement de signal de télévision, les moyens de traitement de signal de radiodiffusion par satellite et les moyens d'enregistrement vidéo, et pour sélectionner un signal de sous-écran qui est l'un parmi un signal d'image de télévision, un signal d'image de radiodiffusion par satellite et un signal d'image de reproduction de moyens d'enregistrement vidéo, générés respectivement par les moyens de traitement de signal de télévision, les moyens de traitement de signal de radiodiffusion par satellite et les moyens d'enregistrement vidéo ;
des moyens de sélection de sous-écran de télévision (SW2), réagissant au micro-ordinateur et connectés aux moyens de sélection d'écran principal de télévision et aux moyens de formation d'image dans l'image, pour afficher le signal de sous-écran sélectionné comme image dans l'image dans l'affichage de l'écran principal, le signal d'image dans l'image étant délivré en sortie aux moyens de sélection de sous-écran de télévision et lu à une fréquence d'horloge donnée par les impulsions d'horloge venant du générateur d'horloge ; des moyens de sélection de sortie audio et de signal d'enregistrement (SW4), réagissant au micro-ordinateur et connectés aux moyens de traitement de signal de télévision, aux moyens de traitement de signal de radiodiffusion par satellite, pour sélectionner un signal audio devant être enregistré par les moyens d'enregistrement vidéo, le signal audio étant sélectionné parmi les signaux audio associés au signal d'image de télévision et au signal d'image de radiodiffusion par satellite ; et
des moyens de sortie audio (SW5), réagissant au micro-ordinateur et connectés aux moyens de traitement de signal de télévision, aux moyens de traitement de signal de radiodiffusion par satellite et aux moyens d'enregistrement vidéo, pour délivrer un signal audio sélectionné parmi les signaux audio associés au signal d'image de télévision, au signal d'image de radiodiffusion par satellite et au signal audio enregistré par les moyens d'enregistrement vidéo.
